# EUROPÄISCHE PATENTSCHRIFT

(11) **EP 2 790 927 B1**
(45) Veröffentlichungstag und Bekanntmachung des Hinweises auf die Patenterteilung: **30.09.2015**
(21) Anmeldenummer: 12797897.1
(22) Anmeldetag: 05.12.2012
(51) Int. Cl.: B60C 11/13, B60C 11/24, B60C 11/03

(54) **LAUFSTREIFENPROFIL EINES FAHRZEUGLUFTREIFENS MIT EINEM INDIKATOR ZUM NACHSCHNEIDEN DES PROFILS**
TREAD PROFILE OF A PNEUMATIC VEHICLE TYRE WITH AN INDICATOR FOR REGROOVING THE PROFILE
SCULPTURES RETAILLABLES D'UNE BANDE DE ROULEMENT D'UN PNEUMATIQUE DE VÉHICULE POURVUES D'UN INDICATEUR POUR LE RETAILLAGE DES SCULPTURES

(30) Priorität: 15.12.2011 DE 102011056451
(43) Veröffentlichungstag der Anmeldung: 22.10.2014
(73) Patentinhaber: Continental Reifen Deutschland GmbH, 30165 Hannover (DE)
(72) Erfinder: HOFFMANN, Jens, 40670 Meerbusch (DE); WÜST, Alexander, 30926 Seelze (DE); GONCALVES ANKIEWICZ, Olga, 30559 Hannover (DE); TKOCZ, Tim, 38120 Braunschweig (DE); POKUTTA-PASKALEVA, Anastassia, 30306 Atlanta (US)
(74) Vertreter: Finger, Karsten
(86) Internationale Anmeldenummer: PCT/EP2012/074472
(87) Internationale Veröffentlichungsnummer: WO 2013/087473

(56) Entgegenhaltungen:
- DE-A1- 2 317 616
- DE-A1-102010 000 637
- DE-T2- 69 804 877

## Beschreibung

Die Erfindung betrifft ein Laufstreifenprofil eines Fahrzeugluftreifens - insbesondere für Nutzfahrzeuge - mit nachschneidbarem Laufstreifenprofil mit radial erhabenen Profilelementen und mit Rillen, welche jeweils zwei benachbarte Profilelemente voneinander trennen und welche in radialer Richtung nach innen hin von einem Rillengrund begrenzt sind, wobei im Rillengrund wenigstens ein Nachschneideindikator mit einer im Rillengrund ausgebildeten sacklochförmigen Vertiefung ausgebildet ist, wobei die sacklochförmige Vertiefung mit ihrer Schnittkontur im Rillengrund mit einer in Haupterstreckungsrichtung der Rille gemessenen Erstreckungslänge L und mit einer quer zur Haupterstreckungsrichtung der Rille gemessenen Erstreckungsbreite A₁ ausgebildet ist und wobei die sacklochförmige Vertiefung in radialer Richtung R nach innen hin von einem Vertiefungsgrund begrenzt ist und mit einer ausgehend vom Rillengrund in radialer Richtung R nach innen hin bis zum Vertiefungsgrund gemessenen Erstreckungstiefe T₁ zur Anzeige einer Nachschneidtiefe ausgebildet ist.

Es ist bekannt, Fahrzeugluftreifen mit einem Laufstreifenprofil auszubilden, bei welchem radial erhabene Profilelemente durch Rillen voneinander beabstandet sind. Die Laufstreifenprofile sind dabei mit einer für den jeweiligen Einsatz optimierten Profiltiefe ausgebildet. Die Rillen sind dabei über ihren wesentlichen Erstreckungsbereich hinweg maximal mit der maximalen Profiltiefe ausgebildet.

Bei Nutzfahrzeugluftreifen ist es bekannt, das Laufstreifenprofil für den Einsatz optimiert unter Einschluss einer zu diesem Zweck optimiert eingestellten Profiltiefe auszubilden. Viele Nutzfahrzeugreifen sind aus mit über den Umfang des Reifens erstreckten Umfangsrillen und mit von diesen getrennten Umfangsrippen oder über den Umfang erstreckten Profilblockreihen ausgebildet, wobei die relativ breiten Umfangsrillen über ihren wesentlichen Erstreckungsbereich über den Umfang hinweg mit maximaler Profiltiefe ausgebildet sind.

Bei derartigen Nutzfahrzeugluftreifen ist es darüber hinaus bekannt, zur Verlängerung der Lebensleistung des Reifens, den Laufstreifen mit zusätzlicher Materialdicke auszubilden, so dass zwischen dem Gürtel des Nutzfahrzeugreifens und der Reifenoberfläche relativ viel Gummimaterial auch unterhalb des Rillenbodens der Umfangsrillen ausgebildet ist. Die für den optimalen Einsatz eines Neureifens bestimmte Profiltiefe wird durch die Ausbildung mit dem wie üblich optimierten Profil mit hierfür geeigneter maximaler Profiltiefe erhalten. Sobald das Laufstreifenprofil soweit abgefahren ist, dass die erforderliche Mindestprofiltiefe verbleibt, können derartige Nutzfahrzeugluftreifen im Profil noch einmal nachgeschnitten werden. Die Nachschneidbarkeit wird am Nutzfahrzeugreifen gekennzeichnet.

Zum Nachschneiden werden die Nutzfahrzeugluftreifen vom Fahrzeug demontiert und mit speziellen Nachschneidewerkzeugen manuell nachgeschnitten. Hierzu muss der Nachschneidende jeweils ein für den jeweiligen Nachschnitt geeignetes Nachschneidewerkzeug benutzen, welches in Abhängigkeit von der jeweiligen Rillenform gewählt wird. Das spezielle Nachschneidewerkzeug wird in die Rille eingeführt und über den Umfang des Nutzfahrzeugluftreifens hinweg gezogen, wobei hierdurch aus dem unteren Rillengrund sowie aus dem unteren Rillenflankenbereich Gummimaterial entfernt wird und vertieft ausgebildete Rillen verbleiben. Der Nachschneidende muss hierzu mit hoher Genauigkeit die Einschneidtiefe einstellen und möglichst konstant halten. Bei zu geringerer Einschneidtiefe wird der Einsatz des Nutzfahrzeugluftreifens nur geringfügig verlängert. Die speziellen Formen zum Nachschneiden erfordern zur Erzielung einer genauen Abformung der gewünschten nachgeschnittenen Umfangsrille außerdem eine Mindestnachschneidtiefe. Ist die Nachschneidtiefe zu klein gewählt, wirkt sich dies negativ auf die nachgeschnittene Querschnittskontur der Umfangsrille ab. Ein zu tiefes Nachschneiden kann die Haltbarkeit und die Einsetzbarkeit des nachgeschnittenen Reifens in ungewünschter Weise beschränken. Daher ist eine hohe Genauigkeit an die einzuhaltende Nachschneidtiefe besonders wichtig. Daher wird ein hoher Aufwand durch den Nachschneidenden betrieben, um eine optimale Einschneidtiefe zu erreichen und konstant während des Einschneidens einzuhalten.

Es wurde bereits vorgeschlagen, bei einem derartigen Laufstreifenprofil eines Nutzfahrzeugluftreifens im Rillengrund der Umfangsrille eine kreiszylinderförmige, bohrungsähnliche Vertiefung auszubilden, die in radialer Richtung von einem Vertiefungsgrund begrenzt ist, wobei der Vertiefungsgrund in derjenigen vom Rillengrund aus gemessenen Tiefe ausgebildet ist, welche der Nachschneidetiefe entsprechen soll. Der Vertiefungsgrund ist bei diesem Nachschneideindikator somit als Maß für die einzustellende und einzuhaltende Nachschneidetiefe ausgebildet. Der Nachschneidende nimmt zum Nachschneiden das der Form der Umfangsrille und der nachzuschneidenden Nachschneidtiefe entsprechend geeignete Nachschneidwerkzeug und schneidet die Umfangsrille nach. Als einzigen Bezugspunkt zur Kontrolle und zum Einhalten des Nachschnitts dient der Vertiefungsboden. Der Nachschrieidende hat somit zwar eine klare Information darüber, ob er die gewünschte Nachschneidetiefe noch nicht erreicht oder ob er sie bereits erreicht hat. Er hat jedoch keine Informationen darüber, ob er die im Reifen angezeigte Nachschneidetiefe gerade erreicht hat, ob er sie bereits geringfügig überschritten hat oder ob er sie bereits deutlich überschritten hat und aussortiert werden müsste. Somit ist weiterhin die Genauigkeit des Nachschneidens beschränkt und sehr von der individuellen Herantastungsweise des Nachschneidenden abhängig. Um eine hohe Genauigkeit der Nachschneidequalität sicher zu stellen, ist somit ein zusätzlicher hoher Aufwand und eine sehr vorsichtige kontrollierte Nachschneidetätigkeit erforderlich.

Es wurde auch gelegentlich vorgeschlagen, mit Hilfe von Feineinschnitten im Rillengrund Informationen über die Nachschneidetätigkeit zu vermitteln. Die reine Verwendung von Feineinschnitten im Rillengrund als Nachschneideindikatoren ermöglichen jedoch nicht die vom manuell Nachschneidenden mit üblichen Tiefenmessgeräten sinnvoller Weise gewünschte und üblicherweise durchgeführte, einfache optische Vorabmessung der für die jeweilige Umfangsrille wirklich möglichen Nachschnitttiefe. Der Nachschneidende müsste hier ganz auf allgemeine ihm vorliegende Angaben vertrauen ohne vorherige eigene Kontrolle der für den jeweiligen Nachschnitt des ihm vorliegenden Reifens wirklich richtigen Nachschneidetiefe. Ob möglicher Weise aufgrund von Beschädigungen oder unsachgemäßer Handhabung die wirklich verbleibende Nachschneidetiefe einen Annahmen entspricht, kann er mit seinen einfachen, optischen Messinstrumenten nicht schnell und einfach kontrollieren. Hierzu müsste der Nachschneidende spezielle Messeinrichtungen und Messmethoden sich anschaffen und einsetzen, die über eine reine optische Kontrolle hinausgingen.

**Aus der** DE 69804877 T2 **ist ein Fahrzeugluftreifen gemäß den Merkmalen des Oberbegriffs bekannt.**

Der Erfindung liegt die Aufgabe zugrunde, ein derartiges Laufstreifenprofil eines Fahrzeugluftreifens mit einfachen Hilfsmitteln für ein genaueres, zuverlässiges Nachschneiden zu schaffen.

Die Aufgabe wird erfindungsgemäß durch die Ausbildung eines Laufstreifenprofils eines Fahrzeugluftreifens - insbesondere für Nutzfahrzeuge - mit nachschneidbarem Laufstreifenprofil mit radial erhabenen Profilelementen und mit Rillen, welche jeweils zwei benachbarte Profilelemente voneinander trennen und welche in radialer Richtung nach innen hin von einem Rillengrund begrenzt sind, wobei im Rillengrund wenigstens ein Nachschneideindikator mit einer im Rillengrund ausgebildeten sacklochförmigen Vertiefung ausgebildet ist, wobei die sacklochförmige Vertiefung mit ihrer Schnittkontur im Rillengrund mit einer in Haupterstreckungsrichtung der Rille gemessenen Erstreckungslänge L und mit einer quer zur Haupterstreckungsrichtung der Rille gemessenen Erstreckungsbreite A₁ ausgebildet ist und wobei die sacklochförmige Vertiefung in radialer Richtung R nach innen hin von einem Vertiefungsgrund begrenzt ist und mit einer ausgehend vom Rillengrund in radialer Richtung R nach innen hin bis zum Vertiefungsgrund gemessenen Erstreckungstiefe T₁ zur Anzeige einer Nachschneidtiefe ausgebildet ist, gemäß den Merkmalen von Anspruch 1 gelöst, bei dem der Nachschneideindikator mit einem zumindest im Vertiefungsgrund der sacklochförmigen Vertiefung zusätzlichen quer zur Haupterstreckungsrichtung der Rille ausgerichteten Einschnitt mit einer Erstreckungslänge A₂, mit einer Einschnittbreite B, wobei B mit B< A₂ sowie mit B< A₁ sowie mit B<L ausgebildet ist, und mit einer Erstreckungstiefe T₂ mit T₂ > T₁, welche ausgehend vom Rillengrund in radialer Richtung R nach innen hin bis zu dem den Einschnitt nach radial innen hin begrenzenden Einschnittsgrund gemessen wird, ausgebildet ist, wobei die Erstreckungstiefe T₁ das Maß für die minimale Nachschneidtiefe und die Erstreckungstiefe T₂ das Maß für die maximale Nachschneidtiefe bildet**, wobei die sacklochförmige Vertiefung mit einer kreisförmigen, elliptischen oder ovalen Schnittkontur im Rillengrund ausgebildet ist.**

Durch diese Ausbildung wird ermöglicht, dass derartige Fahrzeugluftreifen mit optimiertem Profil bei Aufrechterhaltung der Nutzung der Vorteile des Nachschneidens eingesetzt werden können, mit Hilfe des Nachschneideindikators mit der sacklochförmigen Vertiefung mit der Erstreckungstiefe T₁ und mit dem zusätzlichen, zumindest im Vertiefungsgrund der sacklochförmigen Vertiefung quer zur Haupterstreckungsrichtung der Rille ausgerichtete Einschnitt, dessen Einschnittbreite B sowohl kleiner als A₂ als auch kleiner als A₁ und kleiner als L ausgebildet ist, und dessen Erstreckungstiefe T₂ kleiner T₁ ausgebildet ist. Der Vertiefungsgrund der sacklochförmigen Vertiefung ermöglicht eine Anzeige der minimalen Nachschneidtiefe T₁ und der Einschnittsgrund zusatzlich eine Anzeige für die maximale Nachschneidtiefe T₂. Solange der Nachschneidende beim Nachschneiden den Vertiefungsgrund sieht, hat er die Information, dass die minimale Nachschneidtiefe noch nicht erreicht ist und dass weiter nachgeschnitten werden soll. Wenn der Nachschneidende den Vertiefungsgrund nicht mehr sieht, aber den Einschnittgrund noch erkennen kann, weiß der Nachschneidende, dass er sich innerhalb des optimalen, empfohlenen Nachschneidebereichs befindet. Sobald für den Nachschneidenden auch der Einschnittgrund nicht mehr zu erkennen ist, erkennt er direkt, dass er zu tief nachgeschnitten hat und dass der Nutzfahrzeugreifen zum Einsatz nicht mehr geeignet ist. Zur Wahl des richtigen Werkzeuges ermöglicht die sacklochförmige Vertiefung aufgrund ihrer gegenüber der Feineinschnittsbreite relativ großen Dimensionierung eine einfache, auch optische Kontrolle der Tiefe mit herkömmlichen, bekannten auch optischen Messmitteln und Messmethoden. Der Nachschneidende kann somit vor dem Nachschneiden zumindest die Mindesteinschnitttiefe in herkömmlicher Weise nachmessen, das geeignete Nachschneidewerkzeug wählen und dann sicher und einfach die jeweilige Rille mit hoher Genauigkeit nachschneiden. Der Nachschneideindikator ist darüber hinaus platzsparend **bei optimierter mechanischer Belastbarkeit des Indikators**. An einer einzigen Position in einer Rille erhält der Nachschneidende beide Informationen sowohl diejenige über die maximale als auch diejenige über die minimale Nachschneidtiefe. Durch die platzsparende gemeinsame Ausbildung beider Anzeigen in einem Indikator wird darüber hinaus kann vermieden werden, das sonstige Auslegungsparameter des Reifens durch aufwändige Unterbringung negativ beeinflusst werden.

Besonders vorteilhaft ist die Ausbildung eines Laufstreifenprofils gemäß den Merkmalen von Anspruch 2, wobei die erste Erstreckungslänge L der sacklochförmigen Vertiefung mit 2mm≤L≤5mm und die Erstreckungsbreite A₁ mit 2mm≤A₁≤ 5mm ausgebildet ist. Durch diese Ausbildung wird eine einfache optische und mechanische Messbarkeit der Nachscheidtiefe zusätzlich begünstigt.

Besonders vorteilhaft ist die Ausbildung eines Laufstreifenprofils gemäß den Merkmalen von Anspruch 3, wobei die Tiefe T₁ mit 0,5mm≤T₁≤5mm und die Tiefe T₂ mit 1,5mm≤T₂≤6mm ausgebildet ist. Durch diese Ausbildung wird bei hoher mechanischer Belastbarkeit des Indikators eine einfache optische und mechanische Messbarkeit der Nachscheidtiefe zusätzlich begünstigt.

Besonders vorteilhaft ist die Ausbildung eines Laufstreifenprofils gemäß den Merkmalen von Anspruch 4, wobei die Tiefe T₁ und die Tiefe T₂ mit T₂= (T₁ + 1mm) ausgebildet ist. Hierdurch wird sowohl eine Mindest- und als auch eine Maximaleinschneidtiefe angezeigt, wobei diese beiden angezeigten Tiefen eng bei einander liegen und dennoch klar unterscheidbar angezeigt werden. Die unterschiedlichen Anzeigeposition sind sicher produzierbar und ermöglichen aufgrund des geringen Abstandes eine sehr genau definierte Nachschneidtiefe.

Besonders vorteilhaft ist die Ausbildung eines Laufstreifenprofils gemäß den Merkmalen von Anspruch 5, wobei die Breite B des Einschnitts mit 0,5mm≤B≤1mm ausgebildet ist. Durch diese Ausbildung wird im Bereich des Indikators deren denkbarer, geringer Einfluss auf die Umfangssteifigkeit des Reifens zusätzlich minimiert bei Sicherstellung der Anzeigen für die minimale und maximale Nachschneidtiefe.

Besonders vorteilhaft ist die Ausbildung eines Laufstreifenprofils gemäß den Merkmalen von Anspruch 6, wobei die Erstreckungsbreite A₁ der Vertiefung und die Erstreckungslänge A₂ des Einschnitts mit A₂> A₁ ausgebildet ist. Hierdurch kann die Sichtbarkeit des Indikators bei konstanter mechanischer Messbarkeit noch erhöht werden.)

Besonders vorteilhaft ist die Ausbildung eines Laufstreifenprofils gemäß den Merkmalen von Anspruch 7, wobei die Erstreckungslänge A₂ des Einschnitts mit A₂> B_{RG} ausgebildet ist, wobei B_{RG} die quer zur Haupterstreckungsrichtung in der Rille gemessene Breite der Rille im Rillengrund bildet, und wobei insbesondere die Erstreckungslänge A₂ des Einschnitts mit A₂ < B_{RO} ausgebildet ist, wobei B_{RO} die quer zur Haupterstreckungsrichtung in der Rille gemessene Breite der Rille in der radial äußeren Mantelfläche des Reifens bildet. Durch diese Ausbildung wird zusätzlich die Nachschneidebreite mit angezeigt.

Besonders vorteilhaft ist die Ausbildung eines Laufstreifenprofils gemäß den Merkmalen von Anspruch **8**, wobei die sacklochförmige Vertiefung zylinderförmig mit einer im wesentlichen in radialer Richtung R ausgebildeten Zylinderachse ausgebildet ist, wobei der Vertiefungsgrund die eine Stirnfläche des Zylinders und die durch die Schnittkontur mit dem Rillengrund umhüllte Fläche die andere Stirnfläche des Zylinders bildet. Durch diese Ausbildung kann die mechanische Messbarkeit weiter verbessert werden.

Besonders vorteilhaft ist die Ausbildung eines Laufstreifenprofils gemäß den Merkmalen von Anspruch **9**, wobei die sacklochförmige Vertiefung kegelstumpfförmig mit einer im wesentlichen in radialer Richtung R ausgebildeten Kegelachse ausgebildet ist, wobei der Vertiefungsgrund die eine kleinere Stirnfläche des Kegelstumpfes und die durch die Schnittkontur mit dem Rillengrund umhüllte Fläche die größere Stirnfläche des Kegelstumpfes bildet. Durch diese Ausbildung kann eine gute Messbarkeit bei besonders hoher maximaler mechanischer Belastbarkeit des Indikators umgesetzt werden.

Besonders vorteilhaft ist die Ausbildung eines Laufstreifenprofils gemäß den Merkmalen von Anspruch **10**, wobei der Nachschneideindikator in einer einen Abriebindikator (TWI) bildenden Erhöhung des Rillengrundes ausgebildet ist. Die Ausbildung ermöglicht die Nachschneideanzeige und die Abriebanzeige in einer integrierten Anzeigeeinheit. Hierdurch kann der für Anzeigen erforderliche Raum in den Rillen minimiert werden. Die durch Indikatoren auf dem Umfang des Reifens bedingte Massenunwucht kann minimiert werden. Der mögliche Einfluss von Indikatoren auf andere Parameter des Reifens kann minimiert werden.

Besonders vorteilhaft ist die Ausbildung eines Laufstreifenprofils gemäß den Merkmalen von Anspruch **11**, wobei die Rille mit einer die Profiltiefe des Reifens bildenden Rillentiefe **P_{T}** mit 10mm≤ **P_{T}** ≤30mm ausgebildet ist. Bei derartigen Ausbildungen ist das Nachschneiden besonders sinnvoll, da hier die Laufdauer gemessen an der Ausgangsprofilierung besonders effizient erhöht werden kann.

Besonders vorteilhaft ist die Ausbildung eines Laufstreifenprofils gemäß den Merkmalen von Anspruch **12**, wobei die Rille eine Umfangsrille ist, in welcher mehrere - insbesondere maximal sechs - Nachschneideindikatoren über den Umfangs hinweg verteilt angeordnet ausgebildet sind. Durch diese Ausbildung wird das manuelle Nachschneiden mittels Nachschneidemesser begünstigt und die optische Messbarkeit verbessert.

Die Erfindung wird im Folgenden an Hand der in den Figuren 1 bis 8 dargestellten Ausführungsbeispiele näher erläutert. Hierin zeigen
- Fig.1: einen Umfangsabschnitt eines nachschneidbaren Laufstreifenprofils eines Fahrzeugluftreifens für Nutzfahrzeuge,
- Fig.2: eine vergrößerte Darstellung einer Umfangsrille des Laufstreifenprofils von Fig. 1 mit Nachschneideindikator in Draufsicht auf das Laufstreifenprofil,
- Fig. 3: eine Schnittdarstellung der Umfangsrille mit Nachschneideindikator gemäß Schnitt III-III von Fig.2,
- Fig. 4: eine Schnittdarstellung der Umfangsrille mit Nachschneideindikator gemäß Schnitt IV-IV von Fig.2,
- Fig. 5: die Umfangsrille mit Nachschneideindikator in alternativer Ausführung in Draufsicht,
- Fig. 6: eine Schnittdarstellung der Umfangsrille gemäß Schnitt VI-VI von Fig.5,
- Fig. 7: eine Schnittdarstellung der Umfangsrille gemäß Schnitt VII-VII von Fig.5 und
- Fig. 8: eine Umfangsrille und Nachschneideindikator in alternativer Ausführung, bei welcher der Nachschneideindikator in die Position eines Abriebindikators positioniert ist, in zu Fig.7 analoger Darstellung.

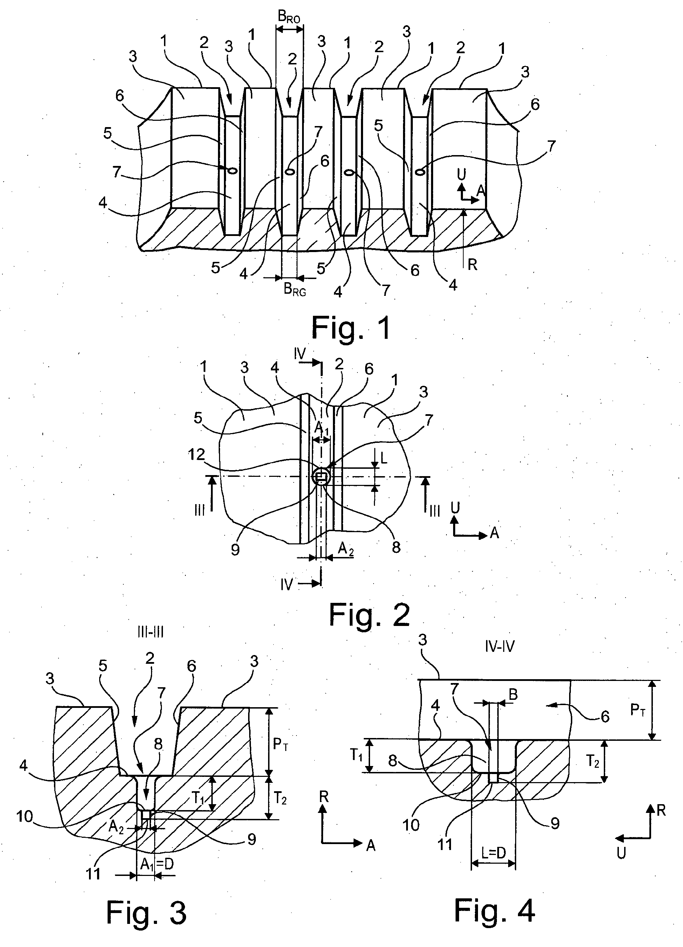

Die Figuren 1 bis 4 zeigen ein nachschneidbares Laufstreifenprofil eines Fahrzeugluftreifens für Nutzfahrzeugreifen, bei welchem radial erhabene über den gesamten Umfang des Fahrzeugluftreifens erstreckte und in Umfangsrichtung U ausgerichtete Profilbänder 1 in axialer Richtung A des Fahrzeugluftreifens nebeneinander angeordnet sind, wobei jeweils zwei axial benachbarte Profilbänder 1 durch eine in Umfangsrichtung U des Fahrzeugluftreifens ausgerichtete und über den gesamten Umfang des Fahrzeugluftreifens erstreckte Umfangsrille 2 axial voneinander beabstandet sind. Die Profilbänder 1 sind in radialer Richtung R nach außen hin jeweils von einer die Bodenkontaktoberfläche bildenden, radial äußeren Oberfläche 3 begrenzt, welche die Mantelfläche des Reifens bilden. Die Umfangsrillen 2 sind in radialer Richtung R nach innen hin durch einen Rillengrund 4 begrenzt, welcher sich über den gesamten Umfang des Fahrzeugluftreifens erstreckt und in Umfangsrichtung U ausgerichtet ist. Die Umfangsrillen 2 sind in axialer Richtung A des Fahrzeugluftreifens jeweils zur einen Seite hin jeweils durch eine Flanke 5 des einen durch die Umfangsrille 2 begrenzten Profilbandes 1 und zur anderen Seite durch eine Flanke 6 des anderen durch die Umfangsrille 2 begrenzten Profilbandes 1 begrenzt. Die Flanken 5 und 6 erstrecken sich jeweils in radialer Richtung R von innen nach außen, ausgehend vom Rillengrund 4 bis zu der radial äußeren Oberfläche 3 des jeweils durch die Flanke 5 bzw. 6 begrenzten Profilbandes 1und bilden dabei die beiden Rillenwände der Umfangsrille 2.

Die Umfangsrillen 2 sind in ihrem Rillengrund 4 jeweils mit einer quer zur Haupterstreckungsrichtung der jeweiligen Umfangsrille 2 und somit in axialer Richtung A des Fahrzeugluftreifens gemessenen Breite B_{RG} des Rillengrundes 4 und in der radial äußeren Mantelfläche mit einer Rillenbreite B_{RO} ausgebildet. Die Breite an der radial äußeren Oberfläche B_{RO} ist jeweils das in axialer Richtung A in den Querschnittsebenen, welche die Reifenachse beinhalten, gemessene Maß des Abstandes zwischen dem Schnitt der Flanke 5 mit der radial äußeren Oberfläche 3 des die Umfangsrille 2 zur einen Seite begrenzenden Profilbandes 1 und dem Schnitt der Flanke 6 mit der radial äußeren Oberfläche 3 des die Umfangsrille 2 zur anderen Seite begrenzenden Profilbandes 1. Für die Rillenbreiten B_{RG} und B_{RO} gilt B_{RO} > B_{RC}.

Der Rillengrund 4 ist in den senkrecht zur Längserstreckungsrichtung der Umfangsrillen 2 und somit im dargestellten Ausführungsbeispiel in den die Reifenachse beinhaltenden Querschnittsebenen mit einem geradlinigen Konturverlauf ausgebildet.

Die Umfangsrille 2 ist jeweils mit einer Tiefe P_{T}, welche der Profiltiefe des Reifens entspricht und welche in radialer Richtung R ausgehend von der radial äußeren Oberfläche 3 nach innen bis zum Profilgrund 4 bemessen wird. Die Profiltiefe P_{T} ist mit 10mm≤P_{T}≤30mm, beispielsweise mit P_{T} = 15mm ausgebildet.

Im Rillengrund 4 der Umfangsrillen 2 sind jeweils über den Umfang der Umfangsrille 2 hinweg verteilt mehrere Nachschneideindikatoren 7 ausgebildet. Beispielsweise sind in einer Umfangsrille über den Umfang der Umfangsrille 2 hinweg verteilt zwei, drei, vier, fünf oder sechs Nachschneideindikatoren ausgebildet. In einer besonderen Ausführung ist lediglich ein einziger Nachschneideindikator 7 in einer Umfangsrille 2 ausgebildet.

Der Nachschneideindikator 7 ist dabei jeweils - wie in den Figuren 2 bis 4 dargestellt ist - mit einer sacklochförmigen Vertiefung 8 und mit einem zusätzlichen Einschnitt 9 ausgebildet. Die sacklochförmige Vertiefung 8 ist zylindrisch mit einer zylinderförmigen Mantelfläche und mit einer Zylinderachse, welche im Wesentlichen in radialer Richtung R des Fahrzeugluftreifens ausgerichtet ist, und in radialer Richtung nach innen hin von einem Vertiefungsgrund 10 begrenzt, welcher die eine Stirnfläche des Zylinderform bildet. Die andere Stirnfläche der Zylinderform ist durch die Schnittkontur der zylinderförmigen Mantelfläche mit dem Rillengrund 4 gebildet. Der Zylinder ist mit einem Zylinderdurchmesser D ausgebildet. Die Vertiefung 8 erstreckt sich somit längs der Haupterstreckungsrichtung der Umfangsrille 2 und somit - im dargestellten Ausführungsbeispiel - in Umfangsrichtung U über eine Erstreckungslänge L und quer zur Haupterstreckungsrichtung der Umfangsrille und somit - im dargestellten Ausführungsbeispiel - in axialer Richtung A des Fahrzeugluftreifens über eine Erstreckungsbreite A₁, wobei bei dem dargestellten Zylinder mit kreiszylinderförmiger Zylindermantelfläche für die Erstreckungslänge L und die Erstreckungsbreite A₁ gilt: L=A₁=D.

Die Vertiefung 8 ist ausgehend vom Rillengrund 4 in radialer Richtung R nach innen hin mit einer Tiefe T₁ ausgebildet, welche den radialen Abstand vom Rillengrund 4 bis zum Vertiefungsgrund 10 bildet. Der Nachschneideindikator 7 ist zusätzlich mit einem Einschnitt 9 ausgebildet, welcher sich im Vertiefungsgrund 10 quer zur Haupterstreckungsrichtung der Umfangsrille 2 - und somit im dargestellten Ausführungsbeispiel in axialer Richtung A des Fahrzeugluftreifens - mit einer Erstreckungslänge A₂ und mit einer quer dazu in Haupterstreckungsrichtung der Umfangsrille 2 - und somit in Umfangsrichtung U - gemessenen Einschnittbreite B erstreckt, wobei B mit B < A₂, mit B < A₁ und mit B < L ausgebildet ist. Der Einschnitt 9 ist in radialer Richtung R nach innen hin mit konstanter Breite B bis in eine Tiefe T₂ ausgebildet, in welcher der Einschnitt 9 nach radial innen hin von einem Einschnittsgrund 11 begrenzt wird. Die Einschnittstiefe T₂ bemisst sich als der in radialer Richtung R gemessene Abstand zwischen Rillengrund 4 und Einschnittsgrund 11. Die Tiefen T₁ und T₂ sind mit T₂ > T₁ ausgebildet.

Die Einschnitttiefe T₁ ist mit 0,5 mm ≤ T₁ ≤ 5mm ausgebildet. Die Einschnitttiefe T₂ ist mit 1,5 mm ≤ T₂ ≤ 6mm ausgebildet. Die Tiefen T₁ und T₂ sind dabei so gewählt, dass T₂ = (T₁ +1mm) gilt. Beispielsweise ist T₂ = 5mm und T₁ = 4mm.

Die Erstreckungslänge L der sacklochförmigen Vertiefung 8 ist mit 2mm ≤ L ≤ 5mm ausgebildet. Die Erstreckungsbreite A₁ ist mit 2mm ≤ A₁ ≤ 5mm ausgebildet. Im dargestellten Ausführungsbeispiel, in welchem die sacklochförmige Vertiefung 8 als kreiszylinderförmige sacklochförmige Vertiefung mit dem Durchmesser D ausgebildet ist, ist der Durchmesser D mit 2mm≤D≤5mm ausgebildet. Beispielsweise ist L=A₁=D=4mm gewählt.

Die Breite B des Einschnitts 9 ist mit 0,5mm≤B≤1mm ausgebildet. Die Erstreckungslänge A₂ des Einschnitts 9 ist mit B_{RO} > A₂ > B_{RG} ausgebildet.

In den in den Figuren 2 bis 4 dargestellten Ausführungsbeispielen ist der Einschnitt 9 mit einer Erstreckungslänge A₂ ausgebildet, welche kleiner ist als die Erstreckungsbreite A₁ der Vertiefung. In einem anderen, nicht dargestellten Ausführungsbeispiel ist die Erstreckungslänge A₂ gleichgroß wie die Erstreckungsbreite A₁ ausgebildet und endet zu beiden Seiten hin jeweils auf der Zylinderkontur der Vertiefung 7. Bei diesen beiden Ausführungen bildet der Vertiefungsgrund 10 die Anzeige des Nachscheideindikators 7 für die noch nicht erreichte minimale Nachschneidetiefe. Der Einschnittgrund 11 bildet die Anzeige für die noch nicht erreichte maximale Nachschneidetiefe.

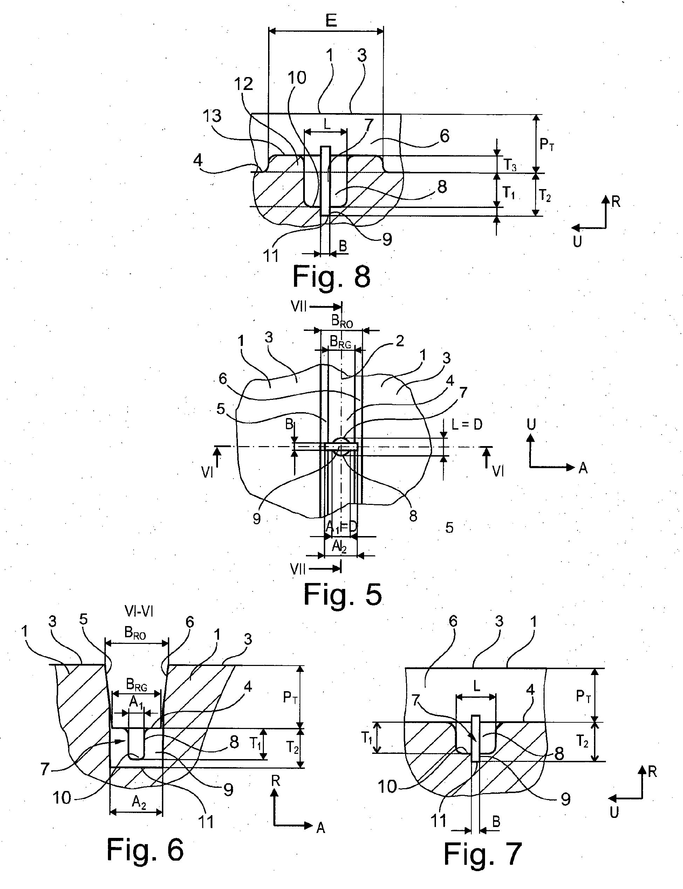

Die Figuren 5 bis 7 zeigen ein alternatives Ausführungsbeispiel, bei welchem der Nachschneideindikator 7 mit Vertiefung 8 und Einschnitt 9 wie in der zu den Figuren 1 bis 4 beschriebenen Weise ausgebildet ist, wobei jedoch die Erstreckungslänge A₂ des Einschnitts 9 mit A₂ > A₁ ausgebildet ist und der Einschnitt 9 längs seiner Erstreckungsrichtung zu beiden Sinn hin aus Kreiszylinderkontur der Vertiefung 8 heraus erstreckt. Im dargestellten Ausführungsbeispiel ist die Erstreckungslänge A₂ mit B_{RO} > A₂ > B_{RG} ausgebildet, wobei der Einschnitt 9 in der außerhalb der Kreiszylinderkontur der Vertiefung 8 ausgebildeten Verlängerung bis in den axialen Erstreckungsbereich der Flanken 5 und 6 erstreckt und dort endet. Bei diesem Ausführungsbeispiel gibt die Erstreckungslänge A₂ eine zusätzliche Information über die Nachschneidebreite der nachzuschneidenden Umfangsrille. Das zum Nachschneiden herangezogene Werkzeug wird so gewählt, dass es die angezeigte Breite A₂ der nachzuschneidenden Umfangsrille berücksichtigt und eine Rille der Breite A₂ nachschneidet.

In einem nicht dargestellten Ausführungsbeispiel ist die in den Figuren 1 bis 4 bzw. in den Figuren 5 bis 7 dargestellte Vertiefung 8 als zylinderförmige sacklochförmige Vertiefung ausgebildet, welche einen elliptischen oder ovalen Querschnitt seiner Zylindermantelfläche aufweist. In diesem Fall ist die längere der beiden Haupterstreckungsachsen der ovalen bzw. elliptischen Kontur in Haupterstreckungsrichtung der Umfangsrille 2 ausgerichtet und gibt somit die Erstreckungslänge L der Vertiefung 8 an. Die kürzere der beiden Haupterstreckungsachsen der ovalen bzw. elliptischen Kontur ist in Querrichtung der Umfangsrille 2 und somit in axialer Richtung A des Fahrzeugluftreifens ausgerichtet. Ihre Erstreckungslänge bildet somit die Erstreckungslänge A₁ der Vertiefung 8, wobei in diesem Fall L und A₁ mit L > A₁ ausgebildet sind.

In einer nicht dargestellten Ausführungsform ist die sacklochförmige Vertiefung 8 als kegelstumpfförmige Vertiefung ausgebildet, wobei die Kegelachse wie die Zylinderachse in den dargestellten Ausführungen im Wesentlichen in radialer Richtung R erstreckt ausgebildet ist und die Kegelstumpfmantelfläche sich ausgehend vom Rillengrund 4 bis zum Vertiefungsgrund 10 hin konstant verjüngt. Beispielsweise ist die Kegelstumpfmantelfläche in den Querschnitten senkrecht zur ihrer Kegelachse kreisförmig. Im Rillengrund 4 weist die Kegelstumpfmantelfläche einen größeren Durchmesser auf als im Vertiefungsgrund 10.

Fig. 8 zeigt eine alternative Anordnung des Nachschneideindikators 7. In diesem Ausführungsbeispiel sind über den Umfang des Fahrzeugluftreifens hinweg verteilt mehrere Abriebindikatoren (TWI) 3 bekannter Art ausgebildet, welche zwischen den die Umfangsrille 2 begrenzenden Profilbändern 1 als in radialer Richtung R des Fahrzeugluftreifens erstreckte Anhebungen sich aus dem Rillengrund 4 über eine Erstreckungshöhe T₃ nach radial außen erheben und über die gesamte Breite der Umfangsrille 2 erstrecken. In bekannter Weise ist der Abriebindikator 12 (TWI) in radialer Richtung nach außen hin im Abstand T₃ vom Rillengrund 4 von einer nahezu ebenen radial äußeren Oberfläche 13 begrenzt ausgebildet, welche den maximal zulässigen Abrieb des Reifens anzeigt. Wie in Fig.8 dargestellt, ist der Nachschneideindikator 7 mit seiner Vertiefung 8 und dem Einschnitt 9 in Umfangsrichtung U des Reifens gesehen mittig innerhalb der Umfangserstreckungslänge der äußeren Oberfläche 13 der den Abriebindikator 12 bildenden Erhebung ausgebildet. Die weitere Ausgestaltung des Nachschneideindikators 7 ist - wie in den dargestellten oder beschriebenen Ausführungen zu den Figuren 1 bis 4 bzw. zu den Figuren 5 bis 7 - dargestellt oder beschrieben ausgebildet. Durch die integrierte Ausbildung des Nachschneideindikators 7 und des Abriebindikator 12 wird zusätzlich an dieser Position die minimale Nachschneidetiefe durch den Vertiefungsgrund 10 und die maximale Nachschneidetiefe durch den Einschnittsgrund 11 angezeigt. In einer Ausführung ist dabei der Nachschneideindikator 7, wie in den Figuren 1 bis 4 dargestellt, ausgebildet. In anderer, in Figur 8 dargestellter Ausführung ist der Nachschneideindikator 7 - wie in den Figuren 5 bis 7 dargestellt-ausgebildet. In diesem Fall zeigt der gemeinsame auch den Abriebindikator 12 integrierend ausgeführte Nachschneidindikator 7 durch die besondere Ausbildung der Einschnittslänge A₂ zusätzlich die Nachschneidebreite der nachzuschneidenden Umfangsrille an.

Der Abriebindikator 12 ist in Umfangsrichtung U des Fahrzeugluftreifens mit einer Erstreckungslänge E ausgebildet mit 5L ≥ E ≥ 2L.

In dem in Fig. 1 dargestellten Ausführungsbeispiel sind die Profilbänder 1 jeweils als über den Umfang des Fahrzeugluftreifens erstreckte Umfangsrippen bekannter Art ausgebildet. In anderer - nicht dargestellter - Ausführungsform sind die Profilbänder 1 als Profilblockreihen bekannter Art ausgebildet, welche sich über den gesamten Umfang des Fahrzeugluftreifens erstrecken und aus in Umfangsrichtung U des Fahrzeugluftreifens hintereinander angeordneten und jeweils durch Querrillen voneinander beabstandeten Profilblockelementen ausgebildet sind. In anderer, nicht dargestellter Ausführung sind ein Teil der Profilbänder als Umfangsrippen und ein Teil der Profilbänder als Profilblockreihen ausgebildet.

Wie in den Figuren 3 und 4 bzw. in den Figuren 6 und 7 sowie in Fig.8 zum Teil in übertriebener Darstellung gezeigt ist, sind die Übergänge zwischen dem Vertiefungsgrund 10 und der zylinderförmigen Mantelfläche der sacklochförmigen Vertiefung 7 sowie zwischen der zylinderförmigen Mantelfläche der sacklochförmigen Vertiefung 7 und dem Rillengrund 4 abgerundet ausgebildet.

Zur Ermittlung der Erstreckungsmaße der Vertiefung 7 im Rillengrund 4 bzw. im Vertiefungsgrund 10 wird der verlängerte Schnitt der Mantelfläche der Vertiefung 7 mit dem Rillengrund 4 bzw. mit dem Vertiefungsgrund 10 herangezogen. Bei kreiszylinderförmiger Mantelfläche ist längs der gesamten Erstreckung des Zylinders entlang seiner Zylinderachse der Durchmesser D konstant und wird als Maß A₁ bzw. L herangezogen.

### Bezugszeichenliste

### (Teil der Beschreibung)

- 1: Profilband
- 2: Umfangsrille
- 3: Radial äußere, die Mantelfläche bildende Oberfläche
- 4: Rillengrund
- 5: Flanke
- 6: Flanke
- 7: Nachschneideindikator
- 8: Sacklochförmige Vertiefung
- 9: Einschnitt
- 10: Vertiefungsgrund
- 11: Einschnittsgrund
- 12: Abriebsindikator (TWI)
- 13: Oberfläche

## Patentansprüche

1. Laufstreifenprofil eines Fahrzeugluftreifens - insbesondere für Nutzfahrzeuge - mit nachschneidbarem Laufstreifenprofil mit radial erhabenen Profilelementen (1) und mit Rillen (2), welche jeweils zwei benachbarte Profilelemente (1) voneinander trennen und welche in radialer Richtung R nach innen hin von einem Rillengrund (4) begrenzt sind, wobei im Rillengrund (4) wenigstens ein Nachschneideindikator (7) mit einer im Rillengrund (4) ausgebildeten sacklochförmigen Vertiefung (8) ausgebildet ist, wobei die sacklochförmige Vertiefung (8) mit ihrer Schnittkontur im Rillengrund (4) mit einer in Haupterstreckungsrichtung (U) der Rille (2) gemessenen Erstreckungslänge L und mit einer quer zur Haupterstreckungsrichtung (U) der Rille (2) gemessenen Erstreckungsbreite A₁ ausgebildet ist und wobei die sacklochförmige Vertiefung (8) in radialer Richtung R nach innen hin von einem Vertiefungsgrund (10) begrenzt ist und mit einer ausgehend vom Rillengrund (4) in radialer Richtung R nach innen hin bis zum Vertiefungsgrund (10) gemessenen Erstreckungstiefe T₁ zur Anzeige einer Nachschneidtiefe ausgebildet ist,
**wobei der Nachschneideindikator (7) mit einem zumindest im Vertiefungsgrund (10) der sacklochförmigen Vertiefung (8) zusätzlichen quer zur Haupterstreckungsrichtung (U) der Rille (2) ausgerichteten Einschnitt (9) mit einer Erstreckungslänge A₂, mit einer Einschnittbreite B, wobei B mit B< A₂ sowie mit B<L ausgebildet ist, und mit einer Erstreckungstiefe T₂ mit T₂ > T₁, welche ausgehend vom Rillengrund (4) in radialer Richtung R nach innen hin bis zu dem den Einschnitt (9) nach radial innen hin begrenzenden Einschnittsgrund (11) gemessen wird, ausgebildet ist, wobei die Erstreckungstiefe T₁ das Maß für die minimale Nachschneidtiefe und die Erstreckungstiefe das Maß T₂ für die maximale Nachschneidtiefe bildet,**
**dadurch gekennzeichnet,**
**dass die Einschnittbreite B mit B< A₁ und die sacklochförmige Vertiefung (8) mit einer kreisförmigen, elliptischen oder ovalen Schnittkontur im Rillengrund (4) ausgebildet ist.**

2. Laufstreifenprofil gemäß den Merkmalen von Anspruch 1,
wobei die erste Erstreckungslänge L der sacklochförmigen Vertiefung mit 2mm≤L≤5mm und die Erstreckungsbreite A₁ mit 2mm≤ A₁≤ 5mm ausgebildet ist.

3. Laufstreifenprofil gemäß den Merkmalen von Anspruch 1 oder 2,
wobei die Tiefe T₁ mit 0,5mm≤T₁≤5mm und die Tiefe T₂ mit 1,5mm≤T₂≤6mm ausgebildet ist.

4. Laufstreifenprofil gemäß den Merkmalen von einem oder mehreren der vorangegangenen Ansprüche,
wobei die Tiefe T₁ und die Tiefe T₂ mit T₂ = (T₁ + 1mm) ausgebildet ist.

5. Laufstreifenprofil gemäß den Merkmalen von einem oder mehreren der vorangegangenen Ansprüche,
wobei die Breite B des Einschnitts (9) mit 0,5mm≤B≤1mm ausgebildet ist.

6. Laufstreifenprofil gemäß den Merkmalen von einem oder mehreren der vorangegangenen Ansprüche,
wobei die Erstreckungsbreite A₁ der Vertiefung (8) und die Erstreckungslänge A₂ des Einschnitts (9) mit A₂> A₁ ausgebildet ist.

7. Laufstreifenprofil gemäß den Merkmalen von einem oder mehreren der vorangegangenen Ansprüche,
wobei die Erstreckungslänge A₂ des Einschnitts (9) mit A₂> B_{RG} ausgebildet ist, wobei B_{RG} die quer zur Haupterstreckungsrichtung (U) in der Rille (2) gemessene Breite der Rille (2) im Rillengrund (4) bildet, und
wobei insbesondere die Erstreckungslänge A₂ des Einschnitts (9) mit A₂ < B_{RO} ausgebildet ist, wobei B_{RO} die quer zur Haupterstreckungsrichtung in der Rille (2) gemessene Breite der Rille (2) in der radial äußeren Mantelfläche des Reifens bildet.

8. Laufstreifenprofil gemäß den Merkmalen von einem oder mehreren der vorangegangenen Ansprüche,
wobei die sacklochförmige Vertiefung (8) zylinderförmig mit einer im wesentlichen in radialer Richtung R ausgebildeten Zylinderachse ausgebildet ist, wobei der Vertiefungsgrund (10) die eine Stirnfläche des Zylinders und die durch die Schnittkontur mit dem Rillengrund (4) umhüllte Fläche die andere Stirnfläche des Zylinders bildet.

9. Laufstreifenprofil gemäß den Merkmalen von einem oder mehreren der Ansprüche 1 bis **8**,
wobei die sacklochförmige Vertiefung (8) kegelstumpfförmig mit einer im wesentlichen in radialer Richtung R ausgebildeten Kegelachse ausgebildet ist, wobei der Vertiefungsgrund (10) die eine kleinere Stirnfläche des Kegelstumpfes und die durch die Schnittkontur mit dem Rillengrund (4) umhüllte Fläche die größere Stirnfläche des Kegelstumpfes bildet.

10. Laufstreifenprofil gemäß den Merkmalen von einem der vorangegangenen Ansprüche,
wobei der Nachschneideindikator (7) in einer einen Abriebindikator (12) bildenden Erhöhung des Rillengrundes ausgebildet ist.

11. Laufstreifenprofil gemäß den Merkmalen von einem der vorangegangenen Ansprüche,
wobei die Rille (2) mit einer die Profiltiefe des Reifens bildenden Rillentiefe **P_{T}** mit 10mm≤ **P_{T}** ≤30mm ausgebildet ist.

12. Laufstreifenprofil gemäß den Merkmalen von einem der vorangegangenen Ansprüche,
wobei die Rille (2) eine Umfangsrille ist, in welcher mehrere - insbesondere maximal sechs - Nachschneideindikatoren (7) über den Umfangs hinweg verteilt angeordnet ausgebildet sind.

## Claims

1. Tread profile of a pneumatic vehicle tyre-particularly for commercial vehicles - having a regroovable tread profile having radially raised profile elements (1) and having grooves (2), each of which separates two adjacent profile elements (1) from one another and is delimited in the radially inward direction R by a groove base (4), wherein at least one regrooving indicator (7) having a depression (8) in the form of a blind hole formed in the groove base (4) is formed in the groove base (4), wherein the depression (8) in the form of a blind hole is formed with its intersection contour in the groove base (4) with a length L of extent measured in the principal direction (U) of extent of the groove (2) and with a width A₁ of extent measured transversely to the principal direction (U) of extent of the groove (2), and wherein the depression (8) in the form of a blind hole is delimited in the radially inward direction R by a depression base (10) and is formed with a depth T₁ of extent, measured in the radially inward direction R as far as the depression base (10), starting from the groove base (4), to indicate a regrooving depth,
wherein the regrooving indicator (7) is formed with an additional slit (9), which is aligned transversely to the principal direction (U) of extent of the groove (2), at least in the depression base (10) of the depression (8) in the form of a blind hole, and has a length A₂ of extent and a slit width B, where B is formed such that B < A₂ and B < L, and a depth T₂ of extent, where T₂ > T₁, which is measured in the radially inward direction R, starting from the groove base (4), as far as the slit base (11) delimiting the slit (9) radially on the inside, wherein the depth T₁ of extent forms the measure of the minimum regrooving depth and the depth of extent forms the measure T₂ of the maximum regrooving depth,
**characterized in that**
the slit width B is formed such that B , A₁ and the depression (8) in the form of a blind hole is formed with a circular, elliptical or oval intersection contour at the groove base (4).

2. Tread profile according to the features of Claim 1,
wherein the first length L of extent of the depression in the form of a blind hole is formed so that 2 mm ≤ L ≤ 5 mm and the width A₁ of extent is formed so that 2 mm ≤ A₁ ≤ 5 mm.

3. Tread profile according to the features of Claim 1 or 2,
wherein the depth T₁ is formed so that 0.5 mm ≤ T₁ ≤ 5 mm and the depth T₂ is formed so that 1.5 mm ≤ T₂ ≤ 6 mm.

4. Tread profile according to the features of one or more of the preceding claims,
wherein the depth T₁ and the depth T₂ are formed so that T₂ = (T₁ + 1 mm).

5. Tread profile according to the features of one or more of the preceding claims,
wherein the width B of the slit (9) is formed so that 0.5 mm ≤ B ≤ 1 mm.

6. Tread profile according to the features of one or more of the preceding claims,
wherein the width A₁ of extent of the depression (8) and the length A₂ of extent of the slit (9) are formed so that A₂ > A₁.

7. The tread profile according to the features of one or more of the preceding claims,
wherein the length A₂ of extent of the slit (9) is formed so that A₂ > B_{RG}, where B_{RG} is the width of the groove (2), measured transversely to the principal direction (U) of extent in the groove (2), at the groove base (4), and
wherein, in particular, the length A₂ of extent of the slit (9) is formed so that A₂ < B_{RO}, where B_{RO} is the width of the groove (2), measured transversely to the principal direction of extent in the groove (2), in the radially outer circumferential surface of the tyre.

8. Tread profile according to the features of one or more of the preceding claims,
wherein the depression (8) in the form of a blind hole is of cylindrical design with a cylinder axis formed substantially in the radial direction R, wherein the depression base (10) forms one end face of the cylinder and the surface enveloped by the intersection contour with the groove base (4) forms the other end face of the cylinder.

9. Tread profile according to the features of one or more of Claims 1 to 8,
wherein the depression (8) in the form of a blind hole is of frustoconical design with a cone axis formed substantially in the radial direction R, wherein the depression base (10) forms one, smaller end face of the frustocone and the surface enveloped by the intersection contour with the groove base (4) forms the larger end face of the frustocone.

10. Tread profile according to the features of one of the preceding claims,
wherein the regrooving indicator (7) is formed in a raised portion of the groove base, said raised portion forming an abrasion indicator (12).

11. Tread profile according to the features of one of the preceding claims,
wherein the groove (2) is formed with a groove depth P_{T} forming the profile depth of the tyre, where 10 mm ≤ P_{T} ≤ 30 mm.

12. Tread profile according to the features of one of the preceding claims,
wherein the groove (2) is a circumferential groove, in which a plurality of regrooving indicators (7) - in particular a maximum of six - are formed in an arrangement distributed over the circumference.

## Revendications

1. Sculpture de bande de roulement d'un pneumatique de véhicule - en particulier pour des véhicules utilitaires - avec des sculptures de bande de roulement retaillables avec des éléments de profil surélevés radialement (1) et avec des gorges (2), qui séparent chacune l'un de l'autre deux éléments de profil voisins (1) et qui sont limitées en direction radiale R vers l'intérieur par un fond de gorge (4), dans laquelle au moins un indicateur de retaillage (7) est formé dans le fond de gorge (4) avec un creux (8) en forme de trou borgne formé dans le fond de gorge (4), dans laquelle le creux en forme de trou borgne (8) est réalisé avec son contour de taille dans le fond de gorge (4) avec une longueur d'extension L mesurée dans la direction d'extension principale (U) de la gorge (2) et avec une largeur d'extension A₁ mesurée transversalement à la direction d'extension principale (U) de la gorge (2) et dans laquelle le creux en forme de trou borgne (8) est limité en direction radiale R vers l'intérieur par un fond de creux (10) et il est réalisé avec une profondeur d'extension T₁ partant du fond de gorge (4) en direction radiale R vers l'intérieur jusqu'au fond de creux (10) pour l'affichage d'une profondeur de retaillage, dans laquelle l'indicateur de retaillage (7) est réalisé avec une entaille supplémentaire (9) au moins dans le fond de creux (10) du creux en forme de trou borgne (8) et orientée transversalement à la direction d'extension principale (U) de la gorge (2), avec une longueur d'extension A₂, avec une largeur d'entaille B, pour laquelle B est formée avec B < A₂ ainsi que B < L, et avec une profondeur d'extension T₂ avec T₂ > T₁, qui est mesurée en partant du fond de gorge (4) en direction radiale R vers l'intérieur jusqu'au fond d'entaille (11) limitant l'entaille (9) radialement vers l'intérieur, dans laquelle la profondeur d'extension T₁ forme la mesure pour la profondeur de retaillage minimale et la profondeur d'extension T₂ forme la mesure pour la profondeur de retaillage maximale, **caractérisée en ce que** la largeur d'entaille B est formée avec B < A₁ et le creux en forme de trou borgne (8) est réalisé avec un contour de taille circulaire, elliptique ou ovale dans le fond de gorge (4).

2. Sculpture de bande de roulement selon les caractéristiques de la revendication 1, dans laquelle la première longueur d'extension L du creux en forme de trou borgne est formée avec 2 mm ≤ L ≤ 5 mm et la largeur d'extension A₁ est formée avec 2 mm ≤ A₁ ≤ 5 mm.

3. Sculpture de bande de roulement selon les caractéristiques de la revendication 1 ou 2, dans laquelle la profondeur T₁ est formée avec 0,5 mm ≤ T₁ ≤ 5 mm et la profondeur T₂ est formée avec 1,5 mm ≤ T₂ ≤ 6 mm.

4. Sculpture de bande de roulement selon les caractéristiques d'une ou de plusieurs des revendications précédentes, dans laquelle la profondeur T₁ et la profondeur T₂ sont formées avec T₂ = (T₁+1 mm).

5. Sculpture de bande de roulement selon les caractéristiques d'une ou de plusieurs des revendications précédentes, dans laquelle la largeur B de l'entaille (9) est formée avec 0,5 mm ≤ B ≤ 1 mm.

6. Sculpture de bande de roulement selon les caractéristiques d'une ou de plusieurs des revendications précédentes, dans laquelle la largeur d'extension A₁ du creux (8) et la longueur d'extension A₂ de l'entaille (9) sont formées avec A₂ > A₁.

7. Sculpture de bande de roulement selon les caractéristiques d'une ou de plusieurs des revendications précédentes, dans laquelle la longueur d'extension A₂ de l'entaille (9) est formée avec A₂ > B_{RG}, où B_{RG} forme la largeur de la gorge (2) dans le fond de gorge (4) mesurée transversalement à la direction d'extension principale (U) dans la gorge (2), et dans laquelle notamment la longueur d'extension A₂ de l'entaille (9) est formée avec A₂ < B_{RO}, où B_{RO} forme la largeur de la gorge (2) mesurée transversalement à la direction d'extension principale dans la gorge (2) dans la surface latérale radialement extérieure du pneu.

8. Sculpture de bande de roulement selon les caractéristiques d'une ou de plusieurs des revendications précédentes, dans laquelle le creux (8) en forme de trou borgne est réalisé en forme de cylindre avec un axe de cylindre réalisé essentiellement en direction radiale R, dans laquelle le fond de creux (10) forme une première face frontale du cylindre et la surface enveloppée par le contour de taille avec le fond de gorge (4) forme l'autre face frontale du cylindre.

9. Sculpture de bande de roulement selon les caractéristiques d'une ou de plusieurs des revendications 1 à 8, dans laquelle le creux en forme de trou borgne (8) est réalisé en forme de tronc de cône avec un axe de cône réalisé essentiellement en direction radiale R, dans laquelle le fond de creux (10) forme la plus petite face frontale du tronc de cône et la surface enveloppée par le contour de taille avec le fond de gorge (4) forme la plus grande face frontale du tronc de cône.

10. Sculpture de bande de roulement selon les caractéristiques d'une quelconque des revendications précédentes, dans laquelle l'indicateur de retaillage (7) est réalisé dans une surélévation du fond de gorge formant un indicateur d'usure (12).

11. Sculpture de bande de roulement selon les caractéristiques d'une quelconque des revendications précédentes, dans laquelle la gorge (2) est réalisée avec une profondeur de gorge P_{T} formant la profondeur de sculpture du pneu avec 10 mm ≤ P_{T} ≤ 30 mm.

12. Sculpture de bande de roulement selon les caractéristiques d'une quelconque des revendications précédentes, dans laquelle la gorge (2) est une gorge périphérique, dans laquelle plusieurs - en particulier au maximum six - indicateurs de retaillage (7) sont réalisés de façon répartie sur la périphérie.
